# DEMANDE DE BREVET EUROPEEN

(11) **EP 2 505 911 A2**
(43) Date de publication de la demande: **03.10.2012**
(21) Numéro de dépôt: 12160949.9
(22) Date de dépôt: 23.03.2012
(51) Int. Cl.: F21V 5/00, F21S 8/12, B60Q 1/00

(54) **Dispositif optique d'un véhicule automobile assurant plusieurs fonctions.**

(30) Priorité: 31.03.2011 FR 1152710
(71) Demandeur: Valeo Vision, 93012 Bobigny (FR)
(72) Inventeur: Albou, Pierre, 75013 PARIS (FR); Puente, Jean-Claude, 93190 LIVRY GARGAN (FR)

(57) **Abrégé**

Dispositif optique (1) d'un véhicule automobile, notamment un dispositif d'éclairage, comprenant :
- un premier module optique (2) comprenant une source de lumière principale (3) et une lentille (10) présentant un pied (12) et une partie active (14), la partie active étant traversée par les rayons émis par la source de lumière principale, et
- un deuxième module optique (17) comprenant une source de lumière auxiliaire (6),
**caractérisé en ce que** la source de lumière auxiliaire (6) est agencée relativement à la lentille (10) de sorte que les rayons lumineux émis par la source de lumière auxiliaire traversent la lentille au niveau du pied (12).

## Description

La présente invention concerne un dispositif optique, notamment pour véhicule automobile, tel qu'un dispositif d'éclairage et/ou de signalisation ayant notamment une fonction photométrique utile pour la circulation sur route du véhicule, permettant au véhicule d'être vu par d'autres véhicules ou au conducteur dudit véhicule de voir à l'extérieur.

Dans le domaine de l'automobile, il est connu d'utiliser des modules elliptiques pour assurer des fonctions d'éclairage, par exemple une fonction de feu de croisement ou une fonction de feu de route. Un tel module elliptique comprend une source de lumière, un miroir elliptique et une lentille convergente. Les rayons de lumière sont émis par la source de lumière au niveau d'un foyer du miroir elliptique et sont ainsi réfléchis par le miroir elliptique vers le deuxième foyer du miroir elliptique. La lentille convergente est disposée de sorte que son foyer soit au moins sensiblement confondu avec le deuxième foyer du miroir elliptique. Ainsi, après réflexion sur le miroir elliptique, les rayons lumineux émis par la source de lumière sont déviés pour former, en sortie de lentille convergente, un faisceau de rayons lumineux au moins sensiblement parallèles.

Il est très délicat de prévoir, dans un dispositif optique comprenant un module elliptique, une fonction auxiliaire à une fonction d'éclairage principale, par exemple une fonction auxiliaire de signalisation notamment une fonction lanterne ou une fonction de signalisation diurne ou une fonction de feux clignotants. Ainsi, un dispositif optique comprenant un module elliptique requiert la présence d'autres dispositifs optiques pour assurer les autres fonctions d'éclairage et/ou de signalisation qui doivent nécessairement être présentes sur un véhicule automobile. Ceci pose notamment des problèmes d'encombrement et d'architecture.

Pour résoudre les problèmes d'encombrement, il est notamment connu d'utiliser des modules optiques à guide de lumière pour assurer les fonctions auxiliaires. On connaît par exemple de telles solutions des documents FR 2 829 223 et FR 2 901 345. Les architectures de tels dispositifs sont complexes et coûteuses.

On connaît encore des documents FR 2 830 073 et FR 2 856 134 des dispositifs d'éclairage elliptiques comprenant des moyens pour assurer une fonction auxiliaire de signalisation. Néanmoins, dans de tels dispositifs, l'architecture est compliquée et les moyens permettant d'assurer la fonction auxiliaire de signalisation perturbent les moyens assurant la fonction principale d'éclairage. Il en résulte une dégradation de la qualité de la fonction principale.

Le but de l'invention est de fournir un dispositif optique de véhicule automobile remédiant aux inconvénients mentionnés et améliorant les dispositifs optiques connus de l'art antérieur. En particulier, l'invention propose un dispositif optique d'éclairage comprenant un module optique elliptique et présentant une fonction de signalisation auxiliaire, le dispositif optique ayant une structure simple et peu coûteuse.

Selon l'invention, le dispositif optique d'un véhicule automobile, notamment un dispositif d'éclairage, comprend :
- un premier module optique comprenant une source de lumière principale et une lentille présentant un pied et une partie active, la partie active étant traversée par les rayons émis par la source de lumière principale, et
- un deuxième module optique comprenant une source de lumière auxiliaire.

La source de lumière auxiliaire est agencée relativement à la lentille de sorte que les rayons lumineux émis par la source de lumière auxiliaire traversent la lentille au niveau du pied. Avec une telle architecture, on peut obtenir à moindre coût un dispositif optique multifonction, compact et ayant une structure simple. Selon un exemple de réalisation, le premier module optique est un module de type elliptique, comprenant par exemple un cache. Selon une variante de réalisation, le cache est un cache présentant un bord de coupure agencé entre un réflecteur et la lentille de manière à former une coupure dans le faisceau émis par le module, par exemple la coupure d'un faisceau de croisement.

La source de lumière auxiliaire peut comprendre au moins une source de lumière ponctuelle, par exemple au moins une diode électroluminescente.

La source de lumière auxiliaire peut comprendre au moins un réflecteur réfléchissant les rayons lumineux de ladite source auxiliaire. Ainsi, les faisceaux émis par les sources de lumière ponctuelles peuvent être collimatés.

Le pied de lentille peut comprendre un dioptre déviant les rayons lumineux émis par la source de lumière auxiliaire.

La source de lumière auxiliaire peut comprendre une source de lumière surfacique, par exemple une diode électroluminescente organique.

Avantageusement, la source surfacique de lumière comprend une face réfléchissante. De préférence, la face réfléchissante est découpée et agencée au niveau d'au moins une source de lumière ponctuelle de manière à ce que la lumière émise par la source de lumière ponctuelle puisse au moins en partie traverser la face réfléchissante de la source surfacique de lumière et en partie être réfléchie par celle-ci. Ainsi, les sources de lumière ponctuelles peuvent être disposées en arrière de la diode électroluminescente organique.

La source surfacique peut être disposée sur la lentille ou sur une lame de verre ou entre deux lames de verre ou entre une lame de verre et la lentille.

La source de lumière principale est de préférence une diode électroluminescente ou une ampoule à décharges.

Le deuxième module optique peut avoir une forme annulaire entourant le premier module optique.

Le premier module optique assure de préférence une fonction d'éclairage, notamment une fonction feu de croisement ou une fonction feu de route. Le deuxième module optique assure quant à lui de préférence une ou plusieurs fonctions de signalisation, notamment une fonction de signalisation diurne et/ou une fonction de signalisation de type lanterne et/ou une fonction de signalisation de type feu clignotant.

Selon une variante de réalisation, le premier module optique est un module de projection, tel qu'un module de type elliptique comprenant un réflecteur agencé avec la source de lumière principale et la lentille pour projeter l'image de la source de lumière. Un module de type elliptique comprend une ou plusieurs portions d'ellipsoïde ou une ou plusieurs portions d'une forme environ ellipsoïde, éventuellement localement modifiée.

L'invention porte aussi sur un véhicule automobile comprenant un dispositif optique défini précédemment.

Les dessins annexés représentent, à titre d'exemples, différents modes de réalisation d'un dispositif optique selon l'invention.
La figure 1 est un schéma de principe représenté en coupe d'un premier mode de réalisation d'un dispositif optique de véhicule automobile selon l'invention.
La figure 2 est un schéma de principe représenté de face d'une première variante du premier mode de réalisation du dispositif optique.
La figure 3 est un schéma de principe représenté de face d'une deuxième variante du premier mode de réalisation du dispositif optique.
La figure 4 est un schéma de principe représenté en coupe d'un deuxième mode de réalisation d'un dispositif optique de véhicule automobile selon l'invention.
La figure 5 est un schéma de principe d'une diode électroluminescente organique pouvant être utilisée dans les différents modes de réalisation du dispositif optique selon l'invention.
La figure 6 est un schéma de principe représenté en coupe d'un troisième mode de réalisation d'un dispositif optique de véhicule automobile selon l'invention.

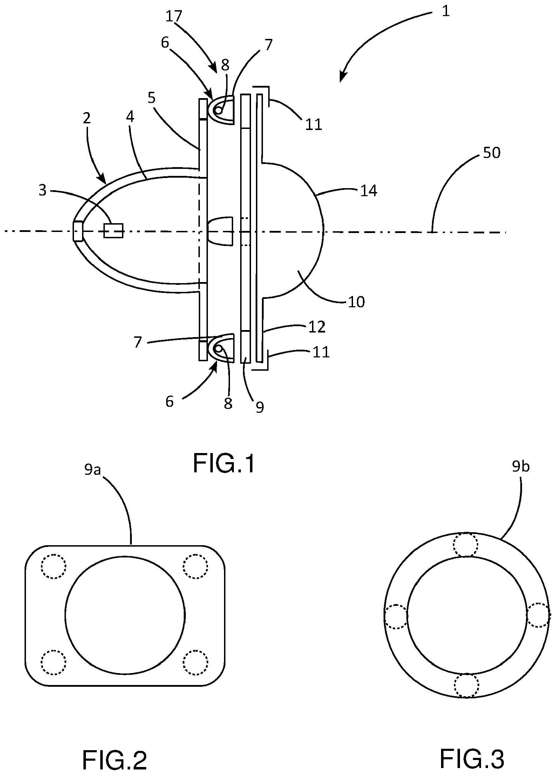

Un premier mode de réalisation d'un dispositif optique 1 selon l'invention est décrit ci-après en référence à la figure 1. Ce dispositif est de préférence un dispositif d'éclairage et de signalisation d'un véhicule automobile, notamment un dispositif avant d'éclairage et de signalisation d'un véhicule automobile. Le dispositif optique est par exemple un projecteur ou un phare. Le dispositif permet d'assurer différentes fonctions. Il permet d'assurer une fonction principale d'éclairage, par exemple une fonction feu de croisement ou une fonction feu de route. Il permet en outre d'assurer une fonction auxiliaire de signalisation, par exemple une fonction de signalisation de type lanterne et/ou une fonction de signalisation diurne et/ou une fonction de signalisation de type feu clignotant.

À cette fin, le dispositif optique comprend :
- un premier module optique 2 de type elliptique comprenant une source de lumière principale 3 et une lentille 10 présentant un pied 12 et une partie active 14, et
- un deuxième module optique 17 comprenant une source de lumière auxiliaire 6.

Le premier module optique comprend un miroir elliptique 4. La source de lumière principale 3 est disposée au moins sensiblement au niveau d'un premier foyer de ce miroir elliptique et un foyer de la lentille convergente 10 est disposé au moins sensiblement au niveau d'un deuxième foyer du miroir elliptique. Ainsi, les rayons lumineux émis par la source de lumière principale sont réfléchis par le miroir elliptique et renvoyés en direction du deuxième foyer. Ensuite, les rayons lumineux sont déviés au niveau de la lentille convergente 10 pour sortir en formant un faisceau de rayons au moins sensiblement parallèles. Le premier module présente un axe optique 50. Le premier module émet des rayons lumineux au moins sensiblement parallèles à cet axe optique. Le premier module optique comprend avantageusement une structure 5 sur laquelle est formé le miroir elliptique. Cette structure permet de préférence de supporter la lentille convergente et le deuxième module optique. De préférence, la structure comprend une zone annulaire ou des oreilles s'étendant au moins sensiblement perpendiculairement à l'axe optique 50. La lentille comprend une partie active 14 et un pied 12. La partie active est traversée par les rayons émis par la source de lumière principale 3 de sorte à les dévier pour former un faisceau de rayons au moins sensiblement parallèle. Le pied n'est quant à lui pas traversé par les rayons émis par la source de lumière principale. En effet, le pied est destiné à la fixation de la lentille. Le pied a de préférence une forme annulaire s'étendant autour de la partie active. Le pied s'étend par exemple radialement d'environ 1 à 3 cm, de préférence d'un 1 à 2 cm, autour de la partie active.

Le deuxième module optique 17 comprend la source de lumière auxiliaire 6. Dans le premier mode de réalisation, la source de lumière auxiliaire comprend au moins une source de lumière ponctuelle comme une diode électroluminescente 8 associée de préférence à un réflecteur 7, par exemple un réflecteur parabolique. Cette source de lumière auxiliaire est interposée entre la structure 5 et le pied 12 de lentille. Ainsi, les rayons émis par la source de lumière ponctuelle traversent le pied 12 éventuellement après réflexion sur le réflecteur 7.

De préférence, la source de lumière auxiliaire comprend également une source surfacique de lumière 9. Cette source surfacique de lumière est également interposée entre la structure 5 et le pied 12 de lentille. Ainsi, les rayons émis par la source de lumière surfacique traversent le pied 12. La source surfacique peut comprendre une diode électroluminescente organique 9.

Dans ce premier mode de réalisation, un moyen de fixation 11 permet de maintenir l'empilement suivant : structure 5, sources de lumière ponctuelles 8, source de lumière surfacique 9 et lentille 10. L'empilement peut être réalisé dans cet ordre. Alternativement, l'empilement peut être réalisé comme suit : structure 5, source de lumière surfacique, sources de lumière ponctuelles et lentille.

De préférence, la diode électroluminescente organique a une forme annulaire, de sorte que les rayons émis par la source de lumière principale puissent atteindre la lentille librement. Alternativement, la diode électroluminescente a une forme de disque de sorte que les rayons émis par la source de lumière principale doivent traverser celle-ci avant d'atteindre la lentille.

De préférence encore, la diode électroluminescente organique présente une face arrière réfléchissante, de sorte que les rayons sont émis par la seule face avant de la diode électroluminescente organique. Si la source de lumière ponctuelle ou les sources de lumière ponctuelles sont positionnées en arrière de la diode électroluminescente organique, on prévoit des ouvertures dans la face arrière réfléchissante afin que les rayons émis par la source ponctuelle ou les sources ponctuelles puissent être émis au travers de la diode électroluminescente organique et au travers du pied de lentille. Alternativement, la face arrière réfléchissante peut être prévue non par sur la diode électroluminescente organique elle-même mais en arrière de celle-ci, et, en particulier, en arrière de la source ponctuelle ou des sources ponctuelles, par exemple sur la structure 5. Enfin, dans le cas où la source électroluminescente organique est située en arrière de la source ponctuelle ou des sources ponctuelles, il n'est pas nécessaire de prévoir d'ouverture dans la face arrière réfléchissante.

Le moyen de fixation peut également comprendre un moyen de positionnement de la lentille relativement à la structure 5. De préférence, le moyen de fixation comprend un moyen de dissipation thermique. Par exemple, le moyen de fixation est réalisé en un matériau conducteur thermique comme l'aluminium. Complémentairement ou alternativement, le moyen de fixation peut présenter des ailettes d'échange thermique.

La source de lumière auxiliaire est agencée relativement à la lentille de sorte que les rayons lumineux émis par la source de lumière auxiliaire traversent la lentille au niveau du pied de lentille.

Dans une première variante du premier mode de réalisation représentée à la figure 2, la diode électroluminescente organique 9a a globalement une forme sensiblement rectangulaire.

Dans une deuxième variante du premier mode de réalisation représentée à la figure 3, la diode électroluminescente organique 9b a globalement une forme sensiblement circulaire.

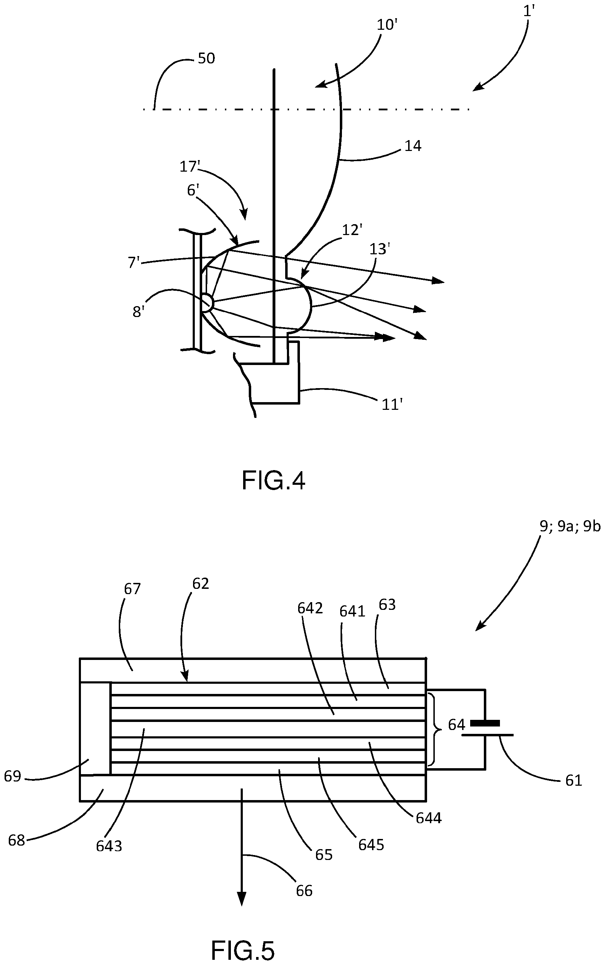

Un deuxième mode de réalisation d'un dispositif optique 1' selon l'invention est décrit ci-après en référence à la figure 4. Il diffère du premier mode de réalisation par son deuxième module optique 17'. En effet, dans le deuxième mode de réalisation, le pied 12' de lentille peut être conformé de sorte à former des dioptres optiques permettant de dévier les rayons lumineux émis par la source de lumière auxiliaire. Par exemple, les dioptres optiques peuvent former une lentille convergente 13'. Comme dans le premier mode de réalisation, le deuxième module optique 17' peut présenter une source de lumière auxiliaire 6' comprenant une ou plusieurs sources de lumière ponctuelles 8' éventuellement associée à des réflecteurs 7' et/ou une source de lumière surfacique.

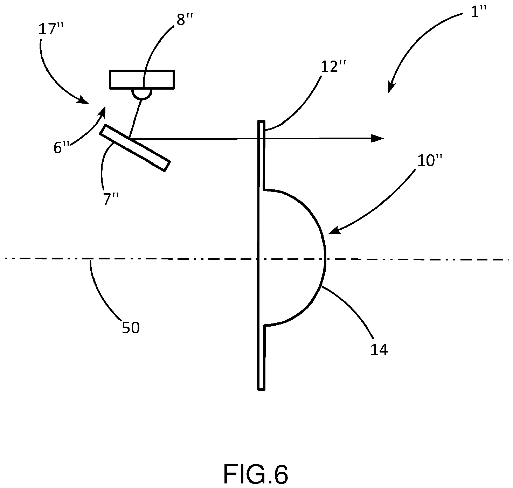

Un troisième mode de réalisation d'un dispositif optique 1" selon l'invention est décrit ci-après en référence à la figure 6. Il diffère du premier mode de réalisation ou du deuxième mode de réalisation par son deuxième module optique 17". En effet, dans le troisième mode de réalisation, le deuxième module optique 17" comprend une source de lumière 6" comprenant une ou plusieurs sources de lumière ponctuelle 8" associé à un ou plusieurs réflecteurs 7", la source de lumière ponctuelle ou les sources de lumière ponctuelles présentant un axe optique non parallèles à l'axe optique 50, en particulier un axe optique perpendiculaire à l'axe optique 50. Les rayons lumineux émis par la source de lumière ponctuelle ou les sources de lumière ponctuelles sont réfléchis par les réflecteurs afin d'être envoyés en direction du pied 12" de lentille selon une direction au moins sensiblement parallèles à l'axe optique 50. Dans ce mode de réalisation, le réflecteur ou les réflecteurs 7" peuvent comprendre des diodes électroluminescentes organiques. Dans ce cas, c'est une face arrière réfléchissante de la diode électroluminescente organique qui assure la fonction réflecteur.

Les sources de lumière principale et auxiliaire peuvent émettre de la lumière de couleurs différentes et peuvent être activées indépendamment l'une de l'autre. De même, les sources de lumière de la source auxiliaire peuvent émettre de la lumière de couleurs différentes et peuvent être activées indépendamment les unes des autres. Ainsi, le dispositif optique peut assurer plusieurs fonctions, notamment plusieurs fonctions nécessitant des couleurs différentes.

Dans les différents modes de réalisation, la ou les sources surfaciques de lumière peuvent être de tout type. Néanmoins, les sources de lumière du type diode électroluminescente organique sont préférées. Un tel dispositif 9 de diode électroluminescente organique est représenté à la figure 5. Le dispositif comprend une diode électroluminescente organique 62 et un générateur de tension électrique 61. La diode électroluminescente organique comprend plusieurs couches : une cathode 63, une anode 65 et une couche organique 64. Lorsque la couche organique est soumise à une tension électrique, elle émet un rayonnement lumineux 66 se propageant au travers de l'anode 65 qui est transparente relativement à ce rayonnement. La couche organique peut éventuellement comprendre différentes couches 641 à 645 en matériaux organiques différents. De préférence, on utilise des diodes électroluminescentes organiques comprenant des strates supplémentaires. En plus de la strate 643 émettrice de lumière, la couche organique comprend une strate 641 favorisant le transport des électrons jusqu'à la strate émettrice 643 et une strate 645 favorisant le transport des trous, à savoir des absences d'électrons, jusqu'à la strate émettrice 643. La couche organique peut aussi comprendre une strate 642 bloquant les trous provenant des strates inférieures, 643 à 645, et une strate 644 bloquant les électrons provenant des strates supérieures 641 à 643. L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677 mentionné plus haut. La diode électroluminescente organique est de préférence encapsulée entre deux lames de verre 67 et 68 et protégée par un joint 69, par exemple un joint de colle. La diode électroluminescente organique peut être collée ou formée sur la lentille convergente 10, 10', 10".

Dans le cas où la diode électroluminescente organique a une forme annulaire, il est possible que celle-ci soit disposée entre deux lames de verre ayant une forme de disque, les cathode, anode et couches mentionnées précédemment n'étant présentes que sur la portion annulaire. Ainsi, au centre de la portion annulaire, il ne subsiste que les deux lames de verre qui perturbent peu le cheminement des rayons lumineux issus de la source principale de lumière. Il faut toutefois tenir compte de la différence de marche optique qu'elles procurent aux rayons lumineux issus de cette source principale de lumière. De préférence, on calcule la lentille de manière que sa zone centrale soit focalisée correctement en dépit de la présence des deux lames de verre supplémentaires. De même, lorsque des sources de lumière ponctuelles sont disposées en arrière de la diode électroluminescente organique, les cathode, anode et couches mentionnées précédemment peuvent ne pas être présentes au niveau des sources de lumière ponctuelles. Ainsi, au niveau des sources de lumière ponctuelles, il ne subsiste que les deux lames de verre qui perturbent peu le cheminement des rayons lumineux issus des sources de lumière ponctuelles. Préférentiellement, l'aire émettrice des sources surfaciques de lumière est supérieure à 1 cm², voire supérieure à 10 cm². Par exemple, selon une variante de réalisation d'un feu de position diurne, encore appelé DRL (pour « Day Running Light »), l'aire émettrice des sources surfaciques de lumière est de préférence supérieure à 35 cm².

Préférentiellement, l'aire émettrice des sources ponctuelles de lumière est inférieure à 1 cm², voire supérieure à 0.5 cm².

De préférence, pour des raisons thermiques, la source de lumière principale est du type à diode électroluminescente ou du type à lampes à décharges.

La fonction auxiliaire de signalisation peut n'être que partiellement assurée par le deuxième module optique. Dans ce cas, un autre dispositif optique est nécessaire pour émettre un faisceau de lumière complémentaire permettant d'assurer la fonction.

Dans le deuxième module optique, la source surfacique de lumière peut par exemple assurer une fonction de signalisation de type lanterne et les sources de lumière ponctuelles peuvent assurer une fonction de signalisation diurne ou une fonction de signalisation de type clignotant. Certaines des sources de lumière ponctuelles peuvent assurer la fonction de signalisation diurne, tandis que d'autres sources de lumière ponctuelles peuvent assurer la fonction de signalisation de type clignotant.

## Revendications

1. Dispositif optique (1 ; 1' ; 1 ") d'un véhicule automobile, notamment un dispositif d'éclairage, comprenant :
- un premier module optique (2) comprenant une source de lumière principale (3) et une lentille (10 ; 10' ; 10") présentant un pied (12 ; 12' ; 12") et une partie active (14), la partie active étant traversée par les rayons émis par la source de lumière principale, et
- un deuxième module optique (17 ; 17' ; 17") comprenant une source de lumière auxiliaire (6 ; 6' ; 6"),
**caractérisé en ce que** la source de lumière auxiliaire (6 ; 6' ; 6") est agencée relativement à la lentille (10 ; 10' ; 10") de sorte que les rayons lumineux émis par la source de lumière auxiliaire traversent la lentille au niveau du pied (12 ; 12' ; 12").

2. Dispositif selon la revendication 1, **caractérisé en ce que** la source de lumière auxiliaire (6 ; 6' ; 6") comprend au moins une source de lumière ponctuelle (8 ; 8' ; 8"), notamment une source de lumière comprise dans une sphère ayant un rayon de 4mm.

3. Dispositif selon la revendication 1 ou 2, **caractérisé en ce que** la source de lumière auxiliaire (6 ; 6' ; 6") comprend au moins une diode électroluminescente (8 ; 8' ; 8").

4. Dispositif selon l'une des revendications précédentes, **caractérisé en ce que** la source de lumière auxiliaire (6 ; 6' ; 6") comprend au moins un réflecteur (7 ; 7' ; 7") réfléchissant les rayons lumineux de ladite source auxiliaire.

5. Dispositif selon l'une des revendications précédentes, **caractérisé en ce que** le pied de lentille (12 ; 12' ; 12") comprend un dioptre (13') déviant les rayons lumineux émis par la source de lumière auxiliaire (6 ; 6' ; 6").

6. Dispositif selon l'une des revendications précédentes, **caractérisé en ce que** la source de lumière auxiliaire (6 ; 6' ; 6") comprend une source de lumière surfacique (9), par exemple une diode électroluminescente organique.

7. Dispositif selon la revendication précédente, **caractérisé en ce que** la source surfacique de lumière (9) comprend une face réfléchissante.

8. Dispositif selon la revendication précédente, **caractérisé en ce que** la face réfléchissante est découpée et agencée au niveau d'au moins une source de lumière ponctuelle (8 ; 8' ; 8"), de manière à ce que la lumière émise par la source de lumière ponctuelle (8 ; 8' ; 8") puisse au moins en partie traverser la face réfléchissante de la source surfacique de lumière et en partie être réfléchie par celle-ci.

9. Dispositif selon l'une des revendications 6 à 8, **caractérisé en ce que** la source surfacique est disposée sur la lentille (10 ; 10' ; 10") ou sur une lame de verre (67) ou entre deux lames de verre (67, 68) ou entre la lentille et une lame de verre.

10. Dispositif selon l'une des revendications précédentes, **caractérisé en ce que** la source de lumière principale (3) est une diode électroluminescente ou une ampoule à décharge.

11. Dispositif selon l'une des revendications précédentes, **caractérisé en ce que** le deuxième module optique (17 ; 17' ; 17") a une forme annulaire entourant le premier module optique (2).

12. Dispositif selon l'une des revendications précédentes, **caractérisé en ce que** le premier module optique (2) assure une fonction d'éclairage, notamment une fonction feu de croisement ou une fonction feu de route et/ou **en ce que** le deuxième module optique (17 ; 17' ; 17") assure une fonction de signalisation, notamment une fonction de signalisation diurne et/ou une fonction de signalisation de type lanterne et/ou une fonction de signalisation de type feu clignotant.

13. Dispositif selon l'une des revendications précédentes, **caractérisé en ce que** le premier module optique (2) est un module de projection, tel qu'un module de type elliptique, comprenant un réflecteur (4) agencé avec la source de lumière principale (3) et la lentille (10 ; 10' ; 10") pour projeter l'image de la source de lumière.
